# EUROPEAN PATENT APPLICATION

(11) **EP 4 846 895 A1**
(43) Date of publication of application: **02.12.2026**
(21) Application number: 25744463.8
(22) Date of filing: 09.01.2025
(51) Int. Cl.: A47G 19/22

(54) **COOLING AND HEATING CUP**

(30) Priority: 25.01.2024 CN 202420179356 U; 25.09.2024 CN 202422348090 U
(71) Applicant: Shenzhen Lute Jiacheng Supply Chain Management Co., Ltd., Shenzhen, Guangdong 518000 (CN)
(72) Inventor: XIE, Hong, Shenzhen, Guangdong 518000 (CN); FU, Kexin, Shenzhen, Guangdong 518000 (CN)
(74) Representative: Santarelli
(86) International application number: PCT/CN2025/071577
(87) International publication number: WO 2025/157019

(57) **Abstract**

The present application discloses a temperature-controlled cup, comprising: an outer container; an inner container, which is removably accommodated within the outer container; at least two medium holders, which are removably accommodated within the outer container and positioned between the outer container and the inner container, each medium holder is provided with a storage space, the at least two medium holders are stacked up and down; and temperature-regulating medium, accommodated within the storage space, each storage space containing the temperature-regulating medium. This configuration enhances the efficiency of heat transfer between the temperature-regulating medium and the inner container and improves the uniformity of temperature distribution, while also minimizing deformation of the medium holders, thereby extending their service life.

## Description

### Cross-Reference to Related Applications

The present application claims priority to Chinese Patent Application No. 202422348090.5, filed on September 25, 2024, and to Chinese Patent Application No. 202420179356.5, filed on January 25, 2024, the entire contents of both of which are incorporated herein by reference.

### Technical Field

The present application relates to the field of baby care equipment, specifically to a temperature-controlled cup.

### Background of the Invention

Beverages such as breast milk, cow's milk, and water typically require refrigeration to prevent spoilage, and some beverages may taste better when frozen. Traditionally, beverages are placed directly in a refrigerator for cooling; for example, breast milk is extracted using a breast pump and then placed in the refrigerator for storage. However, refrigerators are usually large, stationary appliances that require a power connection and must be positioned in a fixed location. This lack of portability means they cannot be used for on-the-go cooling or heating.

In light of these issues, various temperature-controlled cups have appeared on the market. Conventional temperature-controlled cups achieve heating and cooling functions by directly placing ice cubes or hot water in the gap between the inner and outer containers. However, this method suffers from low heat transfer efficiency and uneven temperature distribution, as ice cubes tend to settle at the bottom of the outer container, concentrating the temperature exchange at the base of the cup.

### Summary of the Invention

In view of the deficiencies of the existing technology, embodiments of the present application provide a temperature-controlled cup that addresses the issue of deformation in the medium holders.

To solve the aforementioned technical problem, one technical solution employed in this application is as follows: a temperature-controlled cup, comprising: an outer container; an inner container that is removably accommodated within the outer container; at least two medium holders that are removably accommodated within the outer container and positioned between the outer container and the inner container, each medium holder is provided with a storage space, the at least two medium holders being stacked up and down; and temperature-regulating medium accommodated within each storage space.

In an embodiment, the medium holders are cylindrical and surround the inner container when it is accommodated within the outer container.

In an embodiment, the medium holder includes a sealing member and a cylindrical body, with the body having a notch formed at its end the notch being provided with an injection port, and the sealing member being placed at the injection port and configured to seal the injection port.

In an embodiment, the temperature-controlled cup further comprises a connector, and wherein the connector has a first coupling structure and the outer container has a second coupling structure corresponding to the first coupling structure.

In an embodiment, the first coupling structure is located on the inner wall of the connector, and the second coupling structure is located on the outer wall of the outer container.

In an embodiment, the number of inner containers is at least two, and the at least two inner containers are stacked inside the outer container.

In an embodiment, the bottom of each inner container has a recessed structure.

In an embodiment, the inner container provided with a connector compatible with a breast pump or a nipple.

In an embodiment, the temperature-controlled cup further comprises a connector and a lid, a first end of the connector is configured to connect the outer container and a second end of the connector is configured to connect the lid, where a diameter of the first end of the connector is larger than a diameter of the second end of the connector.

In an embodiment, the temperature-controlled cup further comprises a handle connected to the connector.

In an embodiment, the medium holder is provided with a rotational positioning structure configured to connect a piece of rotating equipment with drive the medium holder or part of the medium holder and to drive the medium holder to rotate.

In an embodiment, the medium holder includes a first part and a second part that are spliced together to form the storage space.

In an embodiment, the first part of the medium holder has a first rotational positioning structure and the second part has a second rotational positioning structure.

In an embodiment, the first rotational positioning structure is a first groove located on the end surface of the first part, and the second rotational positioning structure is a second groove on the end surface of the second part.

To address the aforementioned technical problem, another technical solution employed in this application is to provide a temperature-controlled cup, comprising: an outer container; an inner container that is removably accommodated within the outer container; a medium holder that is removably accommodated within the outer container and positioned between the outer container and the inner container, wherein the medium holder has a storage space and a rotational positioning structure on its end surface; and a temperature-regulating medium accommodated within the storage space.

In an embodiment, the rotational positioning structure is a groove located on the end surface of the medium holder.

To address the aforementioned technical problem, another technical solution employed in this application is to provide a temperature-controlled cup, comprising: an outer container; an inner container removably accommodated within the outer container; a medium holder removably accommodated within the outer container and positioned between the outer container and the inner container, the medium holder is provided with a storage space; and temperature-regulating medium, accommodated within the storage space.

In an embodiment, the medium holders are cylindrical and surround the inner container when it is accommodated within the outer container.

In an embodiment, the medium holder includes a sealing member and a cylindrical body, with the body having a notch formed at its end, said notch being provided with an injection port, and the sealing member is placed at the injection port to seal the injection port.

In an embodiment, the temperature-controlled cup further comprising a connector, wherein the connector has a first coupling structure and the outer container has a second coupling structure corresponding to the first coupling structure.

In an embodiment, the first coupling structure is located on the inner wall of the connector, and the second coupling structure is located on the outer wall of the outer container.

In an embodiment, the number of inner containers is at least two, and the at least two inner containers are stacked inside the outer container.

In an embodiment, the bottom of each inner container has a recessed structure.

In an embodiment, the inner container is provided with a connector compatible with a breast pump or a nipple.

In an embodiment, the temperature-controlled cup further comprises a connector and a lid, a first end of the connector is configured to connect the outer container and a second end of the connector is configured to connect the lid, wherein a diameter of the first end of the connector is larger than a diameter of the second end of the connector.

In an embodiment, the temperature-controlled cup further comprises a handle connected to the connector.

The embodiments of this application provide a temperature-controlled cup that includes: an outer container; an inner container that is removably accommodated within the outer container; at least two medium holders that are removably accommodated within the outer container and positioned between the outer container and the inner container, with each medium holder having a storage space, wherein the at least two medium holders are stacked up and down; and a temperature-regulating medium accommodated within each storage space. This configuration enhances the efficiency of heat transfer between the temperature-regulating medium and the inner container and improves the uniformity of temperature distribution, while also minimizing deformation of the medium holders, thereby extending their service life.

### Brief Description of the Drawings

In order to more clearly describe the technical solutions of the embodiments or the prior art in this application, a brief introduction of the drawings used in the description of the embodiments or the prior art will be provided below. It should be understood that the drawings described below are merely illustrative of certain embodiments of the present application. For those skilled in the art, additional drawings can be derived from the structures shown in these drawings without requiring inventive efforts.
FIG. 1 is a structural schematic diagram of the temperature-controlled cup according to the first embodiment of the present application;
FIG. 2 is an exploded view of the temperature-controlled cup according to the first embodiment of the present application;
FIG. 3 is a cross-sectional view of the temperature-controlled cup according to the first embodiment of the present application;
FIG. 4 is a structural schematic diagram of the medium holder according to the first embodiment of the present application;
FIG. 5 is an exploded view of the medium holder according to the first embodiment of the present application;
FIG. 6 is an exploded view of the temperature-controlled cup according to the second embodiment of the present application;
FIG. 7 is a cross-sectional view of the temperature-controlled cup according to the second embodiment of the present application;
FIG. 8 is a first perspective view of the medium holder according to the second embodiment of the present application;
FIG. 9 is a second perspective view of the medium holder according to the second embodiment of the present application;
FIG. 10 is an exploded view of the medium holder according to the second embodiment of the present application.

The objectives, features, and advantages of the present application will be further explained in conjunction with the embodiments and by referring to the accompanying drawings.

### Detailed Description of Embodiments

In this application, the terms "provided," "disposed," and "connected" should be broadly understood. For example, they can refer to fixed connections, detachable connections, or integrated structures. They may indicate mechanical connections or electrical connections, direct connections, or indirect connections through an intermediary, or they may refer to internal communication between two devices, components, or parts. A person skilled in the art can understand the specific meaning of these terms in this application according to the context.

The terms "center," "longitudinal," "transverse," "length," "width," "thickness," "top," "bottom," "front," "back," "left," "right," "vertical," "horizontal," "top," "bottom," "inner," "outer," "radial," and "circumferential" indicate directional or positional relationships based on the orientation or positional relationships shown in the figures. These terms are used solely to simplify and clarify the description of the present application and should not be interpreted as limiting the invention to a specific orientation, construction, or operation.

Additionally, the terms "first" and "second" are used only for descriptive purposes and should not be understood as indicating relative importance or implying the number of features. Therefore, a "first" or "second" feature may explicitly or implicitly include one or more of that feature. In the description of this application, "multiple" means at least two, such as two or three, unless otherwise explicitly specified.

Moreover, the above terms, in addition to indicating directional or positional relationships, may also have other meanings. For example, the term "top" may also refer to attachment or connection relationships. A person skilled in the art can understand these terms according to the specific context.

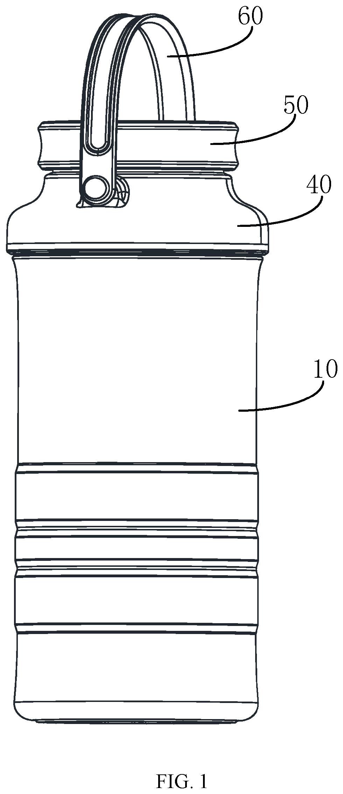

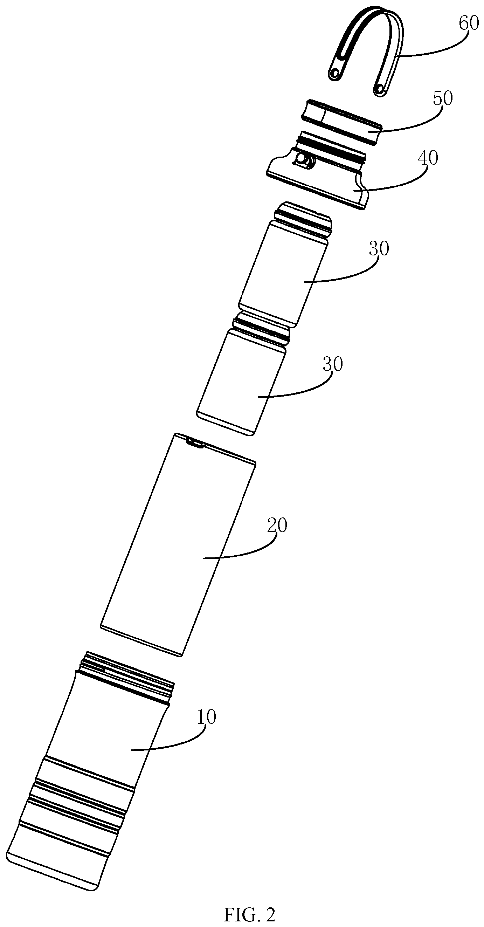

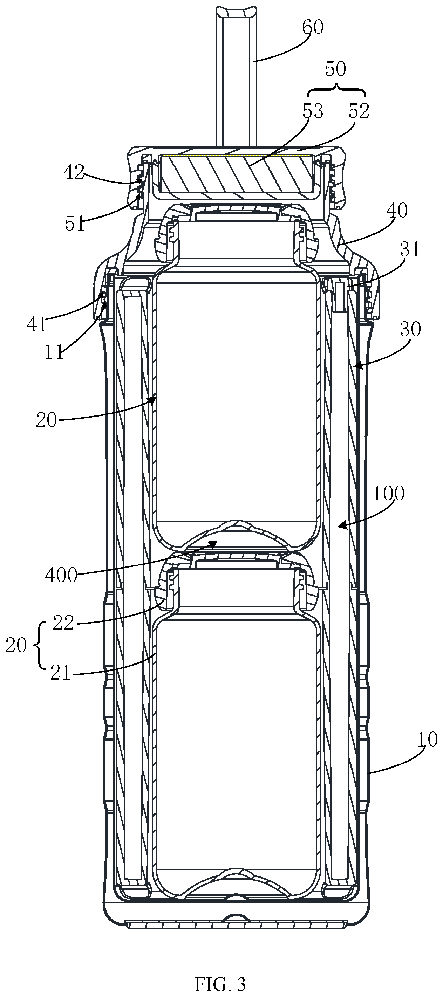

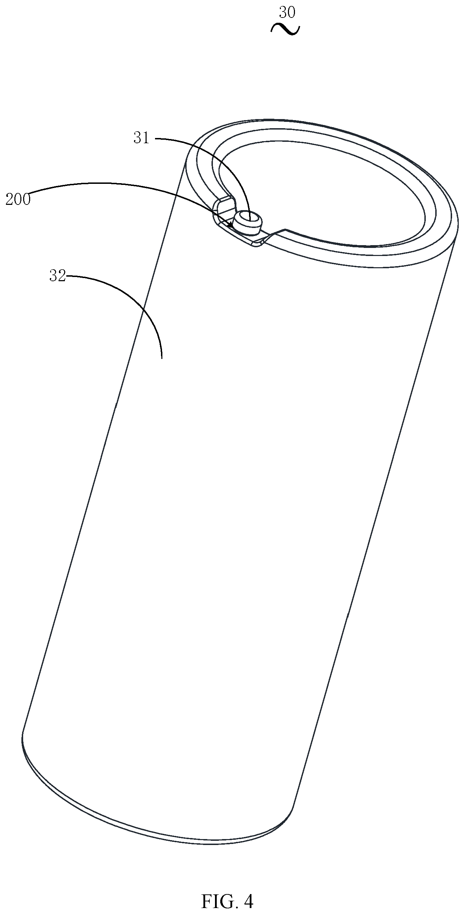

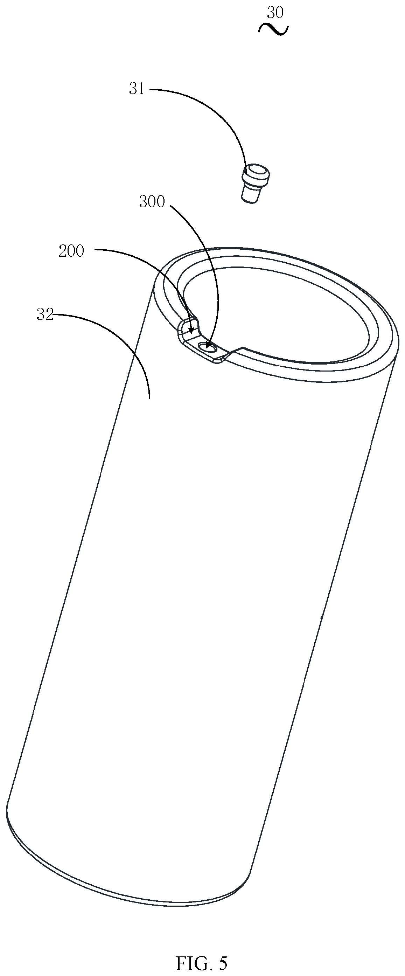

Please refer to FIG. 1, FIG. 2, FIG. 3, FIG. 4, and FIG. 5. FIG. 1 illustrates a structural schematic diagram of the temperature-controlled cup according to the first embodiment of the present application; FIG. 2 shows an exploded view of the temperature-controlled cup according to the first embodiment; FIG. 3 presents a cross-sectional view of the temperature-controlled cup according to the first embodiment; FIG. 4 provides a structural schematic diagram of the medium holder according to the first embodiment; and FIG. 5 depicts an exploded view of the medium holder according to the first embodiment.

In this embodiment, the temperature-controlled cup includes: an outer container 10, an inner container 20, a medium holder 30, and temperature-regulating medium (not shown in the figures).

The inner container 20 is designed to be removably accommodated within the outer container 10. The medium holder 30 is also removably accommodated within the outer container 10 and is positioned between the outer container 10 and the inner container 20. The medium holder 30 is provided with a storage space 100, the temperature-regulating medium is accommodated within the storage space 100.

This embodiment of the present application describes a temperature-controlled cup that comprises the outer container 10, inner container 20, medium holder 30, and temperature-regulating medium. The inner container 20 can be removed from the outer container 10, and the medium holder 30 is positioned in such a way that it is removably situated between the outer container 10 and the inner container 20. The medium holder 30 has a defined storage space 100, in which the temperature-regulating medium is accommodated. This configuration enhances the efficiency of heat transfer and improves the uniformity of temperature distribution.

Testing has been conducted by placing ice between the inner and outer containers as a comparative example. Both the ice and the medium holder were pre-cooled in a refrigerator before being inserted into the gap between the inner and outer containers. The results showed that the cooling efficiency of the medium holder configuration was significantly higher during the initial cooling phase compared to the method of using ice alone, and the uniformity of cooling across different areas was also noticeably superior to that of the comparative example.

It should be understood that the temperature-controlled cup of the embodiments of this application is not limited to cooling the liquid in the inner container 20; it can also be used to heat the liquid in the inner container 20. For example, the medium holder 30 can be pre-cooled by placing it in the refrigerator for a period of time and then placed inside the outer container 10, thereby allowing the liquid in the inner container 20 to be cooled. In another usage scenario, the medium holder 30 can be pre-heated by immersing it in boiling water for a period of time before being placed inside the outer container 10, thus heating the liquid in the inner container 20.

In some usage scenarios, two medium holders 30 can be used interchangeably, with the temperature-regulating media accommodated within the two medium holders being different; one can be used for heat storage, while the other can be used for cold storage. Of course, it is also possible to use only one medium holder 30 that is capable of both heat storage and cold storage. The temperature-regulating medium is typically selected from liquids or solids with a high specific heat capacity, or gels. For example, in one embodiment, the temperature-regulating medium can be a cold gel, or it may consist of an aqueous solution of ethylene glycol or propylene glycol, or it may simply be water. This application does not limit the selection of the temperature-regulating medium.

Optionally, in this embodiment, the medium holder 30 is cylindrical and surrounds the inner container 20 when the inner container 20 is accommodated within the outer container 10. In some embodiments, the medium holder may include a bottom wall, which can further improve the efficiency of heat transfer.

Optionally, the medium holder 30 includes a sealing member 31 and a cylindrical body 32, with the body 32 having a notch 200 formed at its end, the notch 200 being provided with an injection port 300, and the sealing member 31 being placed at the injection port 300 and configured to seal the injection port 300.

In one embodiment, the temperature-controlled cup further includes a connector 40, wherein the connector 40 has a first coupling structure 41, and the outer container 10 has a second coupling structure 11 corresponding to the first coupling structure 41. The first coupling structure 41 may be a threaded structure located on the connector 40, while the second coupling structure 11 may be a threaded structure on the outer container 10 that matches the threaded structure on the connector 40. For example, one of the first coupling structure 41 or the second coupling structure 11 can be an internal thread, while the other can be an external thread. In other embodiments, the first coupling structure 41 and the second coupling structure 11 may employ alternative coupling methods, such as snap-fit or interference fit; this application does not limit the methods of coupling.

Optionally, the first coupling structure 41 is located on the inner wall of the connector 40, while the second coupling structure 11 is located on the outer wall of the outer container 10. By positioning the second coupling structure 11 on the outer wall of the outer container 10, this arrangement does not interfere with the removal and insertion of the inner container 20 and the medium holder 30 from the outer container 10. For example, the first coupling structure 41 can be an internal threaded structure on the inner wall of the connector 40, and the second coupling structure 11 can be an external threaded structure on the outer wall of the outer container 10. The connector 40 and the outer container 10 are coupled together via this threaded connection.

In one embodiment, the temperature-controlled cup may also include a lid 50, wherein a first end of the connector 40 is configured to connect the outer container 10, and a second end of the connector 40 is configured to connect the lid 50. The diameter of the first end of the connector 40 is larger than the diameter of the second end of the connector 40. This design allows for a larger diameter of the outer container 10, facilitating the insertion of the inner container 20 and the medium holder 30 into the outer container 10. To make it easier to detach the connector 40 from the outer container 10, the diameter of the end of the connector 40 that connects to the lid 50 is set to be larger than the diameter of the end that connects to the outer container 10. This enables a user to grip the connector 40 for rotation while ensuring that the outer container 10 has a sufficiently large diameter to allow for the removal and insertion of the inner container 20 and the medium holder 30.

Optionally, the lid 50 is provided with a third coupling structure 51, and the connector 40 has a fourth coupling structure 42. The lid 50 and the connector 40 are connected and can be detached from each other via the engagement of the third coupling structure 51 and the fourth coupling structure 42. The third coupling structure 51 and the fourth coupling structure 42 can be corresponding threaded structures. For example, the third coupling structure 51 can be an internal threaded structure located on the inner wall of the lid 50, while the fourth coupling structure 42 can be an external threaded structure located on the outer wall of the connector 40. By ensuring that the diameter of the end of the connector 40 that connects to the lid 50 is larger than that of the end that connects to the outer container 10, this allows a user to comfortably grip the lid 50 for rotation while also ensuring that the outer container 10 has a sufficiently large diameter to accommodate the removal and insertion of the inner container 20 and the medium holder 30.

In one embodiment, the temperature-controlled cup may also include a handle 60, which is connected to the connector 40. This handle 60 can be used by the user to lift the temperature-controlled cup. Additionally, the handle 60 facilitates the user in gripping the handle 60 to twist the connector 40, thereby making it easier to tighten or loosen the threaded connection between the connector 40 and the outer container 10.

In one embodiment, the number of inner containers 20 is at least two, with the at least two inner containers 20 being stacked within the outer container 10. By providing at least two inner containers 20, it is possible to store breast milk collected at different times separately. For instance, breast milk extracted by a breast pump at different times can be stored in separate containers, thereby avoiding mixing of milk collected at different times. This separation is important as milk stored for extended periods may affect the quality of freshly collected milk, potentially leading to cross-contamination and spoilage. In this embodiment, the preferred number of inner containers 20 is two, although in other embodiments, the number of inner containers 20 can also be one or three or more, and this application does not impose a limitation on that.

In one embodiment, the bottom of each inner container 20 is designed with a recessed structure 400. By incorporating this recessed structure 400, when at least two inner containers 20 are stacked within the outer container 10, the top of the lower inner container 20 can at least partially nest within the recessed structure 400 of the upper inner container 20. This design not only saves space but also ensures the stability of the stacked inner containers 20.

Optionally, the inner container 20 is provided with a connector structure that is compatible with a breast pump or a nipple. For example, the inner container 20 may include a bottle body 21 and a bottle cap 22, which are connected via threads. The threads on the bottle body 21 may match with the outlet thread of the triport structure (negative pressure interface, suction channel, outlet) of the breast pump, allowing the milk extracted by the breast pump to be directly collected into the inner container 20. Alternatively, the threads on the bottle body 21 may be configured to connect with a lid that has a nipple, enabling the inner container 20 to be directly used for feeding infants after the connection is made.

In one embodiment, the inner wall of the side wall and/or bottom wall of the outer container 10 is designed with a vacuum insulation chamber. This vacuum insulation chamber maintains a vacuum to effectively isolate the temperature transfer between the temperature-controlled cup and the external environment.

In one embodiment, the lid 50 consists of a lid shell 52 and insulation material 53 filled inside the lid shell 52. This design reduces the temperature exchange between the interior of the outer container 10 and the external environment. The lid 50, when connected to the connector 40, rests against the upper surface of the inner container 20. The lid 50 does not contact or couple directly with the connector 40.

The embodiments of this application describe a temperature-controlled cup that comprises an outer container, an inner container, a medium holder, and a temperature-regulating medium. The inner container is removably accommodated within the outer container, and the medium holder is also removable and positioned between the outer container and the inner container. The medium holder contains a storage space in which the temperature-regulating medium is housed, thereby enhancing the efficiency of heat transfer and improving the uniformity of temperature distribution.

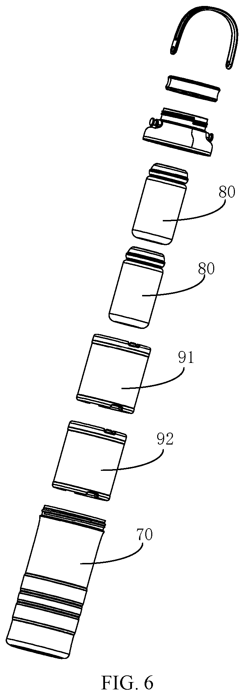

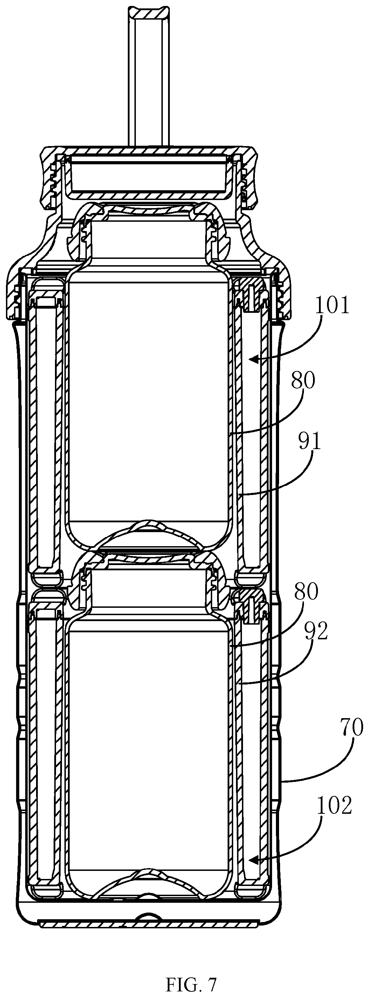

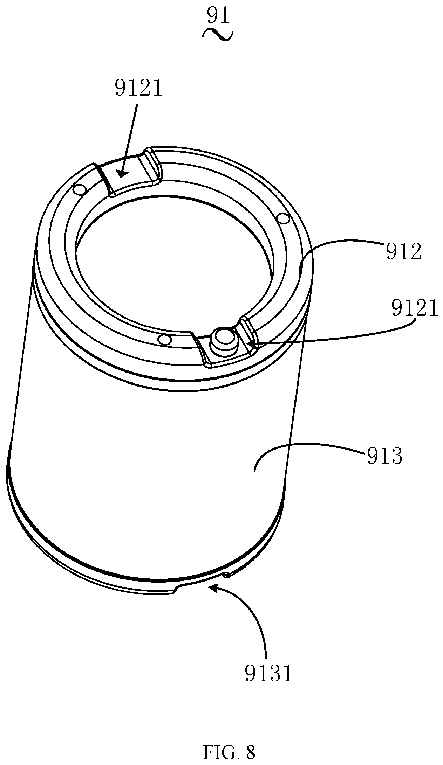

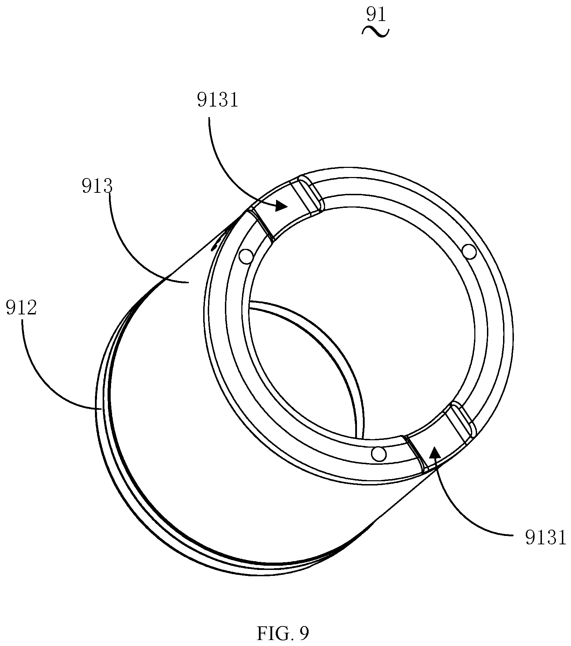

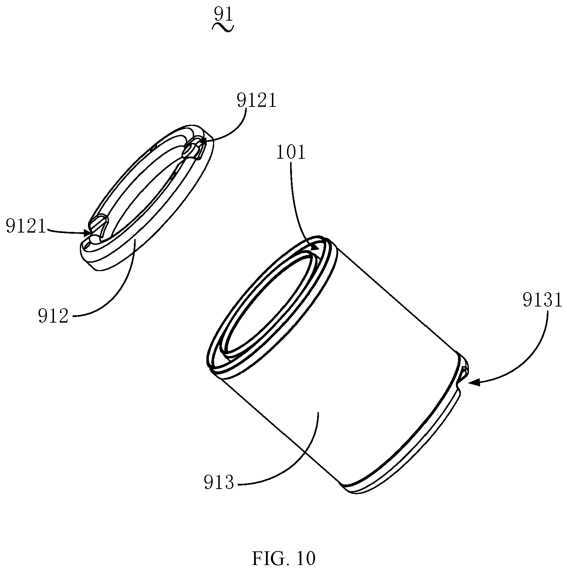

Please refer to FIG. 6, FIG. 7, and FIG. 8. FIG. 6 is an exploded view of the temperature-controlled cup according to the second embodiment of the present application; FIG. 7 is a cross-sectional view of the temperature-controlled cup according to the second embodiment; and FIG. 8 is a first perspective view of the medium holder according to the second embodiment. FIG. 9 is a second perspective view of the medium holder according to the second embodiment; and FIG. 10 is an exploded view of the medium holder according to the second embodiment.

In this embodiment, the temperature-controlled cup includes an outer container 70, an inner container 80, at least two medium holders 91 and 92, and a temperature-regulating medium (not shown in the figures).

The inner container 80 is removably accommodated within the outer container 70. The at least two medium holders 91 and 92 are also removably accommodated within the outer container 70. Both medium holders 91 and 92 are positioned between the outer container 70 and the inner container 80. Each medium holder 91 and 92 contains a storage space. For example, medium holder 91 has a storage space 101, while medium holder 92 has a storage space 102.

The at least two medium holders 91 and 92 are stacked up and down. In some embodiments, the number of inner containers 80 can be two, with the two inner containers 80 stacked on top of each other. Optionally, one medium holder 91 may surround one inner container 80. It should be understood that in the embodiments of this application, there are two medium holders 91 and 92, but in other embodiments, three or more medium holders can be used; this application does not impose a limitation in this regard. The number of inner containers 80 can be one, three, or more, and this application does not impose a limitation in this regard.

The temperature-regulating medium is accommodated within storage spaces 101 and 102, with each storage space 101 and 102 containing the temperature-regulating medium.

Optionally, the medium holder 91 has rotational positioning structures 9121 and 9131, which are used to connect a piece of rotating equipment (not shown) to the medium holder 91 or a portion thereof and to drive the medium holder 91 to rotate. In some embodiments, the medium holder 91 is equipped with rotational positioning structures 9121 and 9131 located on opposite end surfaces. In other embodiments, two rotational positioning structures 9121 can be located on the same end of the medium holder 91, with the two rotational positioning structures being symmetrically arranged.

Optionally, the medium holder 91 comprises a first part 912 and a second part 913, with the first part 912 and the second part 913 joined together to form the storage space 101.

Optionally, the first part 912 of the medium holder 91 is equipped with a first rotational positioning structure 9121, while the second part 913 is equipped with a second rotational positioning structure 9131.

Optionally, the first rotational positioning structure 9121 is a groove located on the end surface of the first part 912, while the second rotational positioning structure 9131 is a groove located on the end surface of the second part 913.

The embodiments of this application describe a temperature-controlled cup that includes: an outer container; an inner container that is removably accommodated within the outer container; at least two medium holders that are removably accommodated within the outer container and positioned between the outer container and the inner container, with each medium holder having a storage space; the at least two medium holders being stacked vertically; and a temperature-regulating medium housed within the storage spaces. Each storage space contains the temperature-regulating medium, which enhances the efficiency of heat transfer between the temperature-regulating medium and the inner container and improves the uniformity of temperature distribution. Furthermore, the medium holders are not prone to deformation, thereby extending their service life.

Please refer to FIG. 6, FIG. 7, and FIG. 8. A temperature-controlled cup is provided, which includes: an outer container 70, an inner container 80, a medium holder 91, and a temperature-regulating medium (not shown in the figures).

The inner container 80 is designed to be removably accommodated within the outer container 70. The medium holder 91 is also removably accommodated within the outer container 70 and is positioned between the outer container 70 and the inner container 80. The medium holder 91 contains a storage space 101, and the end surface of the medium holder 91 is equipped with a rotational positioning structure 9121. The temperature-regulating medium is housed within the storage space 101.

Optionally, the rotational positioning structure 9121 is a groove 9121 formed on the end surface of the medium holder 91.

In order to make the purpose, technical solution and advantages of the present application more clearly understood, the present application is further described in detail below in conjunction with the accompanying drawings and embodiments. It should be understood that the specific embodiments described herein are only used to explain the present application and are not used to limit the present application.

The above is only a specific implementation of the present application. It should be pointed out that for ordinary technicians in this technical field, several improvements and modifications can be made without departing from the principles of the present application. These improvements and modifications should also be regarded as the scope of protection of the present application.

## Claims

1. A temperature-controlled cup, **characterized by** comprising:
an outer container;
an inner container, removably accommodated within the outer container;
at least two medium holders, removably accommodated within the outer container and positioned between the outer container and the inner container, each medium holder is provided with a storage space, the at least two medium holders are stacked up and down; and
temperature-regulating medium, accommodated within each storage space.

2. The temperature-controlled cup of claim 1, **characterized in that**, wherein the medium holders are cylindrical and surround the inner container when it is accommodated within the outer container.

3. The temperature-controlled cup of claim 2, **characterized in that**, wherein the medium holder includes a sealing member and a cylindrical body, with the body having a notch formed at its end, the notch being provided with an injection port, and the sealing member being placed at the injection port and configured to seal the injection port.

4. The temperature-controlled cup of claim 1 or claim 2 or claim 3, **characterized in that**, wherein the temperature-controlled cup further comprises a connector, and wherein the connector has a first coupling structure and the outer container has a second coupling structure corresponding to the first coupling structure.

5. The temperature-controlled cup of claim 4, **characterized in that**, wherein the first coupling structure is located on the inner wall of the connector, and the second coupling structure is located on the outer wall of the outer container.

6. The temperature-controlled cup of claim 1 or claim 2 or claim 3, **characterized in that**, wherein the number of inner containers is at least two, and the at least two inner containers are stacked inside the outer container.

7. The temperature-controlled cup of claim 6, **characterized in that**, wherein the bottom of each inner container has a recessed structure.

8. The temperature-controlled cup of claim 1 or claim 2 or claim 3, **characterized in that**, wherein the inner container is provided with a connection structure compatible with a breast pump or a nipple.

9. The temperature-controlled cup of claim 1 or claim 2 or claim 3, **characterized in that**, wherein the temperature-controlled cup further comprises a connector and a lid, a first end of the connector is configured to connect the outer container and a second end of the connector is configured to connect the lid, wherein a diameter of the first end of the connector is larger than a diameter of the second end of the connector.

10. The temperature-controlled cup of claim 9, **characterized in that**, wherein the temperature-controlled cup further comprises a handle connected to the connector.

11. The temperature-controlled cup of claim 1, **characterized in that**, wherein the medium holder is provided with a rotational positioning structure configured to connect a piece of rotating equipment with drive the medium holder or part of the medium holder and to drive the medium holder to rotate.

12. The temperature-controlled cup of claim 1, **characterized in that**, wherein the medium holder includes a first part and a second part that are spliced together to form the storage space.

13. The temperature-controlled cup of claim 12, **characterized in that**, wherein the first part of the medium holder has a first rotational positioning structure and the second part has a second rotational positioning structure.

14. The temperature-controlled cup of claim 13, **characterized in that**, wherein the first rotational positioning structure is a first groove located on the end surface of the first part, and the second rotational positioning structure is a second groove on the end surface of the second part.

15. A temperature-controlled cup, **characterized by** comprising:
an outer container;
an inner container removably accommodated within the outer container;
a medium holder removably accommodated within the outer container and positioned between the outer container and the inner container, the medium holder is provided with a storage space, and a rotational positioning structure located on the end surface of the medium holder; and
temperature-regulating medium, accommodated within the storage space.

16. The temperature-controlled cup of claim 15, **characterized in that**, wherein the rotational positioning structure is a groove located on the end surface of the medium holder.

17. A temperature-controlled cup, **characterized in that**, comprising:
an outer container;
an inner container removably accommodated within the outer container;
a medium holder removably accommodated within the outer container and positioned between the outer container and the inner container, the medium holder is provided with a storage space; and
temperature-regulating medium, accommodated within the storage space.

18. The temperature-controlled cup of claim 17, **characterized in that**, wherein the medium holders are cylindrical and surround the inner container when it is accommodated within the outer container.

19. The temperature-controlled cup of claim 18, **characterized in that**, wherein the medium holder includes a sealing member and a cylindrical body, with the body having a notch formed at its end, said notch being provided with an injection port, and the sealing member is placed at the injection port to seal the injection port.

20. The temperature-controlled cup of claim 17 or claim 18 or claim 19, **characterized by** further comprising a connector, wherein the connector has a first coupling structure and the outer container has a second coupling structure corresponding to the first coupling structure.

21. The temperature-controlled cup of any one of claims 17-19, **characterized by** further comprising a connector, wherein the connector has a first coupling structure and the outer container has a second coupling structure corresponding to the first coupling structure.

22. The temperature-controlled cup of claim 20, **characterized in that**, wherein the first coupling structure is located on the inner wall of the connector, and the second coupling structure is located on the outer wall of the outer container.

23. The temperature-controlled cup of any one of claims 17-19, **characterized in that**, wherein the number of inner containers is at least two, and the at least two inner containers are stacked inside the outer container.

24. The temperature-controlled cup of claim 22, **characterized in that**, wherein the bottom of each inner container has a recessed structure.

25. The temperature-controlled cup of any one of claims 17-19, **characterized in that**, wherein the inner container is provided with a connection structure compatible with a breast pump or a nipple.

26. The temperature-controlled cup of any one of claims 17-19, **characterized in that**, wherein the temperature-controlled cup further comprises a connector and a lid, a first end of the connector is configured to connect the outer container and a second end of the connector is configured to connect the lid, wherein a diameter of the first end of the connector is larger than a diameter of the second end of the connector.

27. The temperature-controlled cup of claim 26, **characterized in that**, wherein the temperature-controlled cup further comprises a handle connected to the connector.
